(19) **Europäisches Patentamt / European Patent Office / Office européen des brevets**

(11) **EP 4 729 889 A1**

(12) **EUROPEAN PATENT APPLICATION**
published in accordance with Art. 153(4) EPC

(43) Date of publication:
**22.04.2026 Bulletin 2026/17**

(21) Application number: **24893390.5**

(22) Date of filing: **18.11.2024**

(51) International Patent Classification (IPC):
**G01C 21/36** (2006.01)

(52) Cooperative Patent Classification (CPC):
**G01C 21/36**

(86) International application number:
**PCT/CN2024/132688**

(87) International publication number:
**WO 2025/108233 (30.05.2025 Gazette 2025/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.11.2023 CN 202311573540**

(71) Applicant: **Huawei Technologies Co., Ltd.
Shenzhen, Guangdong 518129 (CN)**

(72) Inventors:
• **HE, Tierui
  Shenzhen, Guangdong 518129 (CN)**
• **XU, Qing
  Shenzhen, Guangdong 518129 (CN)**
• **TANG, Wuquan
  Shenzhen, Guangdong 518129 (CN)**

(74) Representative: **Thun, Clemens
  Mitscherlich PartmbB
  Karlstraße 7
  80333 München (DE)**

(54) **NAVIGATION ARROW DISPLAY METHOD, VEHICLE-MOUNTED DEVICE, READABLE STORAGE MEDIUM AND CHIP**

(57) This application provides a navigation arrow display method, a vehicle-mounted device, a readable storage medium, and a chip, and relates to the field of vehicle navigation technologies. The method is applied to a vehicle-mounted device in a vehicle, the vehicle is provided with a head up display HUD, and the method includes: detecting that there is an obstacle in a first lane in which the vehicle is currently located; determining a location of the obstacle in a field of view image; determining a display location of a navigation arrow based on the location of the obstacle in the field of view image; and displaying the navigation arrow by using the HUD based on the display location of the navigation arrow. In the technical solutions provided in this application, the navigation arrow is highly integrated with an actual road condition, and user viewing experience is good.

[FIG. 9]

```
┌─────────────────────────────────────────────────┐
│   Obtain a field of view image in front of a     │──── S901
│                   vehicle                        │
└─────────────────────────────────────────────────┘
                        │
┌─────────────────────────────────────────────────┐
│   Detect, based on the field of view image,      │
│   that there is an obstacle in a first lane in   │──── S902
│   which the vehicle is currently located         │
└─────────────────────────────────────────────────┘
                        │
┌─────────────────────────────────────────────────┐
│   Display an AR navigation arrow based on a      │
│   location of the obstacle by using an AR-HUD    │──── S903
└─────────────────────────────────────────────────┘
```

## Description

This application claims priority to Chinese Patent Application No. 202311573540.4, filed with the China National Intellectual Property Administration on November 22, 2023 and entitled "NAVIGATION ARROW DISPLAY METHOD, VEHICLE-MOUNTED DEVICE, READABLE STORAGE MEDIUM, AND CHIP", which is incorporated herein by reference in its entirety.

## TECHNICAL FIELD

This application relates to the field of vehicle navigation technologies, and in particular, to a navigation arrow display method, a vehicle-mounted device, a readable storage medium, and a chip.

## BACKGROUND

With development of computer technologies, people gradually combine an augmented reality (augmented reality, AR) technology with a head up display (head up display, HUD) in a vehicle for use, thereby forming an augmented reality head up display AR-HUD with more powerful functions. The vehicle can display an AR navigation arrow by using the AR-HUD during traveling Currently, the vehicle usually determines a location of the AR navigation arrow based on navigation data, lane-related information, and the like, and then displays the AR navigation arrow at the location by using the AR-HUD. However, in this display manner, robustness of display effect of the AR navigation arrow is low, in other words, the AR navigation arrow is not highly integrated with an actual road condition, and display effect is poor.

## SUMMARY

This application provides a navigation arrow display method, a vehicle-mounted device, a readable storage medium, and a chip, to resolve a prior-art problem that an AR navigation arrow is not highly integrated with an actual road condition, and display effect is poor.

To achieve the foregoing objective, this application uses the following technical solutions:
According to a first aspect, an embodiment of this application provides a navigation arrow display method. The method is applied to a vehicle-mounted device in a vehicle, the vehicle is provided with a head up display HUD, and the method includes: detecting that there is an obstacle in a first lane in which the vehicle is currently located; determining a location of the obstacle in a field of view image; and displaying a navigation arrow by using the HUD based on the location of the obstacle in the field of view image.

The head up display HUD may be a conventional head up display, or may be a virtual reality head up display AR-HUD. This is not limited in this embodiment.

According to the method provided in this embodiment, the vehicle-mounted device can determine an appropriate display location of the navigation arrow with reference to the location of the obstacle such as a fence or a water safety barrier in an actual road condition, and display the navigation arrow at the location by using the HUD. In this way, the navigation arrow is highly integrated with the actual road condition, thereby improving user viewing experience.

In some embodiments, detecting that there is the obstacle in the first lane in which the vehicle is currently located includes: obtaining the field of view image of the vehicle; and detecting, based on the field of view image, that there is the obstacle in the first lane in which the vehicle is currently located. In other words, in this embodiment, the vehicle-mounted device determines, through image recognition, whether there is an obstacle in the first lane.

Certainly, in some other embodiments, the vehicle-mounted device may alternatively determine, by comprehensively using a radar and the field of view image, whether there is an obstacle in the first lane, for example, first use the radar to detect whether there is an obstacle near the vehicle, collect a field of view image when there is an obstacle near the vehicle, and recognize the field of view image to determine whether there is an obstacle in the first lane. The radar may be a lidar, a millimeter-wave radar, or the like. This is not limited in this embodiment.

In some embodiments, displaying the navigation arrow by using the HUD based on the location of the obstacle in the field of view image includes:

when the obstacle in the first lane does not affect passing, displaying, by using the HUD based on the location of the obstacle in the field of view image, the navigation arrow that indicates to pass the first lane; or
when the obstacle in the first lane affects passing, but a second lane in a same direction as the first lane is passable, displaying, by using the HUD based on the location of the obstacle in the field of view image, the navigation arrow that indicates to travel from the first lane to the second lane.

According to the method provided in this embodiment, on the basis of recognizing that there is an obstacle in the first lane, the vehicle-mounted device can further determine an impact result of the obstacle on a passing condition of the first lane, and display different navigation arrows based on different impact results. Therefore, a display process is intelligent.

In addition, when there is an obstacle in the first lane and another lane that is in the same direction as the first lane, and the first lane and the another lane are not passable, the vehicle-mounted device may further display alarm information indicating that a road is not passable, to prompt a user.

In some embodiments, displaying the navigation arrow by using the HUD based on the location of the obstacle in the field of view image includes: determining a display location of the navigation arrow based on the location of the obstacle in the field of view image; and displaying the navigation arrow by using the HUD based on the display location of the navigation arrow.

In some embodiments, when the navigation arrow is a forward arrow, determining the display location of the navigation arrow based on the location of the obstacle in the field of view image, and displaying the navigation arrow by using the HUD based on the display location of the navigation arrow includes: determining a passing guide line of the navigation arrow based on the location of the obstacle in the field of view image; determining a location that is at a preset distance from the vehicle and that is on the passing guide line as the display location of the navigation arrow; and displaying, by using the HUD based on the display location of the navigation arrow, the navigation arrow along the passing guide line.

In this embodiment, the vehicle can determine an appropriate display location and an appropriate passing guide line for the navigation arrow based on the location of the obstacle, and guide the vehicle to safely pass along the passing guide line. This method helps the vehicle drive safely.

In some embodiments, determining the passing guide line of the navigation arrow based on the location of the obstacle in the field of view image includes: when the first lane in the field of view image is a straight lane, determining a passable area of the first lane based on the location of the obstacle, where the passable area does not include the obstacle; and determining an area center line of the passable area as the passing guide line of the first lane.

According to the method provided in this embodiment, when the first lane is a straight lane, the vehicle-mounted device determines the center line of the passable area of the first lane as the passing guide line, so that the navigation arrow can be displayed at a central location of the passable area, to guide the vehicle to safely pass through the obstacle, and avoid bumping into the obstacle.

In some embodiments, determining the passing guide line of the navigation arrow based on the location of the obstacle in the field of view image includes: when the first lane in the field of view image is a curved lane, determine, based on the location of the obstacle in the field of view image, a center line of boundary lines on two sides of a passable area of the first lane, where distances between points on the center line and the boundary lines on the two sides of the passable area are equal; and determining the center line as the passing guide line of the navigation arrow.

According to the method provided in this embodiment, when the first lane is a curved lane, the passing guide line determined by the vehicle-mounted device can not only guide the vehicle to avoid the obstacle, but also be close to a radian of the curved lane. This not only helps improve traveling safety, but also helps improve display effect of the navigation arrow.

In some embodiments, when the navigation arrow is a left-turn arrow or a right-turn arrow, determining the display location of the navigation arrow based on the location of the obstacle in the field of view image, and displaying the navigation arrow by using the HUD based on the display location of the navigation arrow include: determining a passing guide line of the navigation arrow based on the location of the obstacle; determining, based on navigation information and traveling information of the vehicle, a track tangent line of the vehicle during stable traveling after the vehicle turns left or right; determining an intersection point of the passing guide line and the track tangent line as the display location of the navigation arrow; and displaying, by using the HUD based on the display location of the navigation arrow, the navigation arrow in a direction of the track tangent line of the vehicle.

According to the method provided in this embodiment, under an action of the passing guide line, the vehicle-mounted device can display the left-turn arrow and the right-turn arrow in front of an actual passing location of the vehicle, so that viewing experience is good.

In some embodiments, when the obstacle is a junction of a crossroad, determining the display location of the navigation arrow based on the location of the obstacle in the field of view image, and displaying the navigation arrow by using the HUD based on the display location of the navigation arrow includes: determining a location of the junction as the display location of the navigation arrow; and displaying, by using the HUD, the navigation arrow along a branch road at the location of the junction.

Compared with displaying the navigation arrow at a middle location of the branch road, displaying the navigation arrow along a direction of the branch road by using the junction as a start point is more convenient for a driver to view, and can play a better guiding role.

In some embodiments, determining the display location of the navigation arrow based on the location of the obstacle in the field of view image includes: determining an initial display location of the navigation arrow based on navigation information and location information of the vehicle; and correcting the initial display location based on the location of the obstacle in the field of view image, to obtain a corrected display location, where the corrected display location is a final display location of the navigation arrow.

In some embodiments, the obstacle includes at least one of a fence, a water safety barrier, a road sign, a junction of a crossroad, a road construction fence, a pedestrian, and another vehicle.

In some embodiments, the method further includes: recognizing, based on the field of view image within preset time, whether the vehicle is traveling in a wrong way; and if the vehicle is traveling in the wrong way, displaying prompt information prompting that the vehicle travels in the wrong way, to ensure driving safety.

According to a second aspect, an embodiment of this application provides a vehicle-mounted device. The vehicle-mounted device is configured to perform the method shown in the first aspect.

According to a third aspect, an embodiment of this application provides a computer-readable storage medium. The computer-readable storage medium stores a computer program. When the computer program is executed by a processor, the method shown in the first aspect is implemented.

According to a fourth aspect, an embodiment of this application provides a chip. The chip includes a processor and a memory. The memory stores a computer program. When the computer program is executed by the processor, the method shown in the first aspect is implemented.

According to a fifth aspect, an embodiment of this application provides a computer program product. The computer program product stores a computer program. When the computer program is run by a processor, the method shown in the first aspect can be implemented.

According to a sixth aspect, an embodiment of this application further provides a vehicle. The vehicle includes the vehicle-mounted device shown in the second aspect and a head up display HUD. The vehicle-mounted device displays a navigation arrow by using the HUD.

It may be understood that, for beneficial effect of the second aspect to the sixth aspect, refer to related descriptions in the first aspect. Details are not described herein again in this application.

BRIEF DESCRIPTION OF DRAWINGS

FIG. 1 is a diagram of a working principle of an HUD according to an embodiment of this application;
FIG. 2 is a diagram of displaying an AR navigation arrow according to an embodiment of this application;
FIG. 3 is a diagram of displaying danger prompt information according to an embodiment of this application;
FIG. 4 is a diagram of a lane and a lane line according to an embodiment of this application;
FIG. 5 is a diagram of a vehicle coordinate system according to an embodiment of this application;
FIG. 6 is a diagram of a pixel coordinate system according to an embodiment of this application;
FIG. 7A is a diagram of a partial structure of a vehicle to which a navigation arrow display method according to an embodiment of this application is applicable;
FIG. 7B is a diagram of a structure of an arrow determining module according to an embodiment of this application;
FIG. 8 is a diagram of a steering angle according to an embodiment of this application;
FIG. 9 is a schematic flowchart of a navigation arrow display method according to an embodiment of this application;
FIG. 10 is a diagram of a display style of an AR navigation arrow according to an embodiment of this application;
FIG. 11A to FIG. 11C are diagrams of different road passing conditions according to an embodiment of this application;
FIG. 12 is a schematic flowchart of an AR navigation arrow display method in a forward scenario according to an embodiment of this application;
FIG. 13 is a diagram of determining a display location of an AR forward arrow according to an embodiment of this application;
FIG. 14 is a diagram of determining a display location of an AR forward arrow according to another embodiment of this application;
FIG. 15 is a schematic flowchart of an AR navigation arrow display method in a turning scenario according to an embodiment of this application;
FIG. 16 is a diagram of display effect of an AR navigation arrow in a left turning scenario according to an embodiment of this application;
FIG. 17 is a schematic flowchart of an AR navigation arrow display method in a branch road traveling scenario according to an embodiment of this application;
FIG. 18 is a diagram of display effect of displaying an AR navigation arrow in a branch road traveling scenario according to an embodiment of this application;
FIG. 19A and FIG. 19B are diagrams of displaying prompt information according to an embodiment of this application;
FIG. 20 is a diagram of displaying prompt information according to another embodiment of this application;
FIG. 21 is a flowchart of an AR navigation arrow display method according to another embodiment of this application;
FIG. 22 is a diagram of correcting a display location of an AR navigation arrow according to an embodiment of this application;
FIG. 23A is a schematic flowchart of a lane recognition method according to an embodiment of this application;
FIG. 23B is a flowchart of a method for determining wrong-way traveling of a vehicle according to an embodiment of this application;
FIG. 24 is a diagram of a longitudinal distance between a target vehicle and an ego vehicle according to an embodiment of this application; and
FIG. 25 is a diagram of a structure of a chip according to an embodiment of this application.

DESCRIPTION OF EMBODIMENTS

The following describes in detail the technical solutions provided in embodiments of this application with reference to the accompanying drawings

It should be understood that, in descriptions of embodiments of this application, "/" indicates "or", unless otherwise specified. For example, A/B may indicate A or B. The term "and/or" in this specification describes only an association relationship between associated objects, and indicates that three relationships may exist. For example, A and/or B may indicate the following three cases: Only A exists, both A and B exist, and only B exists.

Terms "first" and "second" in embodiments are merely intended for a purpose of description, and shall not be understood as an indication or an implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

With development of computer technologies, people gradually combine an augmented reality (augmented reality, AR) technology with a head up display (head up display, HUD) in a vehicle for use, thereby forming an augmented reality head up display AR-HUD with more powerful functions. The AR-HUD can improve driving experience of users, and is widely used in vehicles.

The following first describes a display principle of the HUD by using an example.

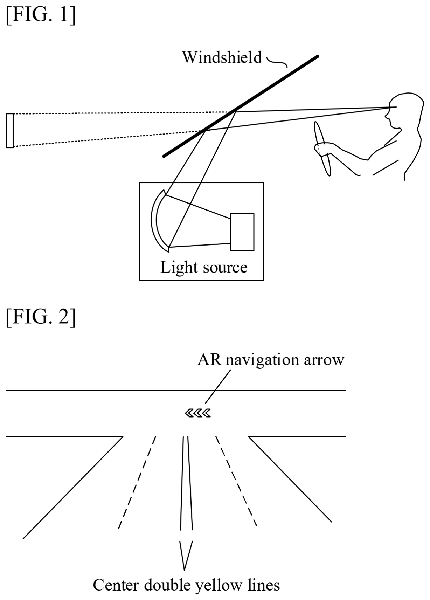

FIG. 1 is a diagram of a working principle of an HUD according to an embodiment of this application. The HUD mainly works based on an optical reflection principle. For example, refer to FIG. 1. The HUD is disposed below a windshield in a cockpit of a vehicle, and can emit a projected light ray to the windshield through a light source. The projected light ray carries to-be-displayed related information. After the projected light ray is reflected by the windshield, the reflected light ray enters eyes of a driver in a direction from a front field of view to a human eye. Because the human eye considers that the light ray is transmitted along a straight line, the driver considers that the reflected light ray is emitted from the front field of view, and therefore sees the related information projected by the HUD in the front field of view.

Generally, the related information projected by the HUD includes meter information of the vehicle (such as a vehicle speed, a fuel volume, and gear information), driving reminder information (such as vehicle collision warning information and lane deviation warning information), navigation information (a navigation arrow, a route congestion status, remaining driving duration, arrival time, and the like), and the like. It may be understood that, compared with a conventional technology in which information is displayed on a screen of a head unit, the HUD can directly display the information in the front field of view. It may be understood that, in a traveling process of the vehicle, the driver can quickly obtain the information by directly observing the front field of view. This avoids a case in which the driver frequently looks down at the screen of the head unit to obtain the information, and can improve driving safety.

The AR-HUD further provides an AR display function on the basis of the HUD. Specifically, the AR-HUD can display, in the front field of view, an AR picture integrated with an actual road condition information, to enhance obtaining of field of view information by the driver, and provide better user experience. Therefore, more and more vehicles start to use the AR-HUD function.

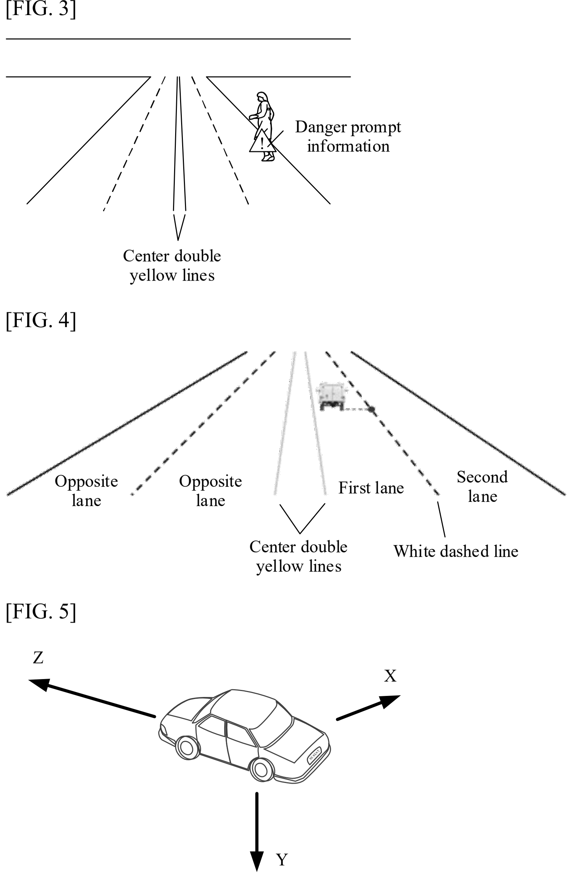

In some implementations, the vehicle can use the AR-HUD to implement functions such as AR navigation and AR warning with reference to content such as navigation information, advanced driver assistance system (advanced driver assistance system, ADAS) information, and driving field of view information (for example, a field of view image). For example, as shown in FIG. 2, the vehicle can display, in the front field of view based on the navigation information by using the AR-HUD, an AR navigation arrow integrated with an actual road condition. Alternatively, refer to FIG. 3. After detecting a pedestrian near a lane, the vehicle can display danger prompt information at a location of the pedestrian by using the AR-HUD.

Currently, when displaying an AR navigation arrow, a vehicle on which an AR-HUD is installed usually determines a type and a location of the AR navigation arrow by using navigation data, lane recognition information, lane line detection information, and the like, and then displays the AR navigation arrow at the location. In an ideal state, the AR navigation arrow should appear at proper time, be visually consistent with an actual road, and be compatible with various complex actual road conditions. However, in a current display manner, obstacles such as a fence, a water safety barrier, and a junction of a crossroad in a driving field of view are not considered. Therefore, robustness of display effect of the AR navigation arrow is low, the display effect is not highly integrated with an actual road condition, and the display effect is poor.

Therefore, embodiments of this application provide a navigation arrow display method. According to the method, a vehicle on which an AR-HUD is installed can display an AR navigation arrow with reference to a location of an obstacle in an actual road condition, so that the AR navigation arrow is highly integrated with the actual road condition, thereby improving user viewing experience.

The following first explains some terms in embodiments of this application.

## (1) Lane and lane line

The lane is an area in which a vehicle travels, and is usually located between two lane lines. For ease of description, refer to FIG. 4. In this embodiment, a lane in which the vehicle is currently located is referred to as a first lane, another lane that is in a same direction as the first lane is referred to as a second lane, a third lane, or the like, and a lane whose traveling direction is opposite to that of the first lane is referred to as an opposite lane. It should be noted that, in embodiments, use of "first", "second", and "third" to define lanes is intended to distinguish between different lanes. Relative locations of the first lane, the second lane, and the third lane are not limited in embodiments.

In embodiments, an attribute of the lane line usually includes a line type and a color. The line type of the lane line usually includes a dashed line and a solid line, the color of the lane line usually includes yellow and white, and each lane line usually includes one or two lines. For example, refer to FIG. 4. Two yellow lines in the middle of a road are center double yellow lines, and are used to divide lanes with different traveling directions. A white dashed line on the road is used to divide different lanes in a same direction.

## (2) Vehicle coordinate system

The vehicle coordinate system is a special coordinate system used to describe vehicle motion. For example, refer to FIG. 5. A coordinate origin of the vehicle coordinate system is usually a centroid of a vehicle, a vehicle traveling direction is a Z-axis direction, a vertical direction is a Y-axis direction, and a direction from a left side to a right side of the vehicle is an X-axis direction. In a traveling process of the vehicle, more attention is paid to a relative location between the vehicle and each object around the vehicle, instead of an absolute location of the object. Therefore, location information of each object (for example, a lane, a lane line, or an obstacle) in a field of view image is usually determined based on the vehicle coordinate system.

## (3) World coordinate system

The world coordinate system (world coordinate system, WCS) is also referred to as a measurement coordinate system, is a three-dimensional rectangular coordinate system, and may be used as a reference to describe spatial locations of a camera and a to-be-measured object. A location of the world coordinate system may be determined based on an actual situation.

## (4) Pixel coordinate system

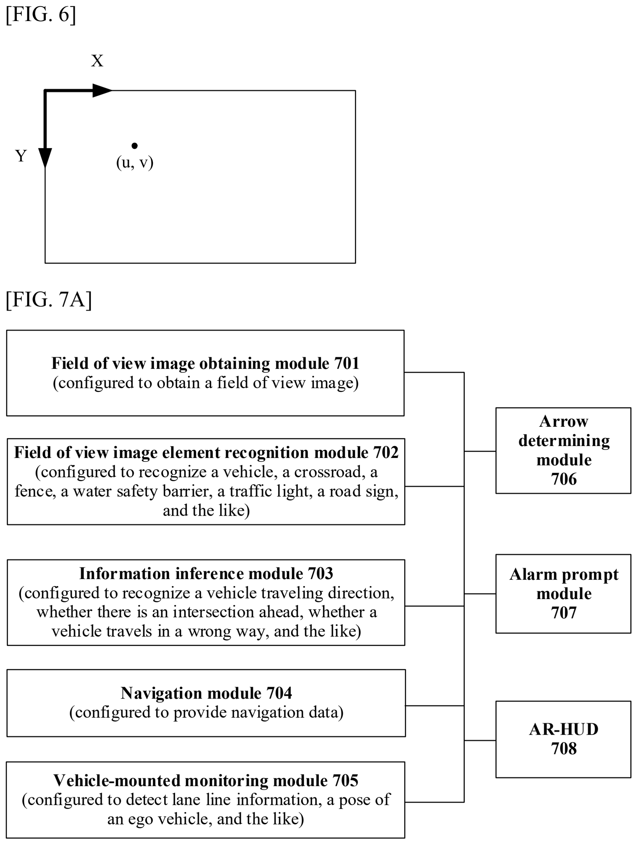

The pixel coordinate system is an image coordinate system in a unit of pixel, and is used to describe a location, in an image, of each pixel in the image. For example, refer to FIG. 6. A coordinate origin of the pixel coordinate system is usually an upper left corner vertex of an image plane, and an X axis and a Y axis are respectively parallel to a horizontal edge and a vertical edge of an image. A location of a pixel in the pixel coordinate system of the image may be represented by (u, v). It should be noted that the vehicle coordinate system, the world coordinate system, and the pixel coordinate system may be mutually converted.

The following specifically describes the navigation arrow display method provided in embodiments of this application with reference to the accompanying drawings.

FIG. 7A is a diagram of a partial structure of a vehicle to which a navigation arrow display method according to an embodiment of this application is applicable. Refer to FIG. 7A. The vehicle includes a field of view image obtaining module 701, a field of view image element recognition module 702, an information inference module 703, a navigation module 704, a vehicle-mounted monitoring module 705, an arrow determining module 706, an alarm prompt module 707, and an AR-HUD 708.

The field of view image obtaining module 701 may be a camera, and is configured to obtain a field of view image. For example, the field of view image obtaining module 701 includes at least a camera disposed in front of the vehicle, and the field of view image includes at least a field of view image in front of the vehicle.

It should be noted that, to obtain an external image of the vehicle, the camera may be located at an appropriate location outside the vehicle. For example, in this embodiment of this application, the camera may be located near a windshield inside the vehicle, or may be disposed around a front bumper or a radiator grille, to capture an image of a front area of the vehicle. Alternatively, to obtain an image of a side of the vehicle, the camera may be disposed near an internal side window. A specific location of the camera is not limited in this embodiment.

The field of view image element recognition module 702 is configured to: recognize the obtained field of view image by using an image recognition algorithm, and determine key information in the field of view image. For example, the field of view image is segmented by using a bilateral segmentation network (bilateral segmentation network, BiSeNet) algorithm or the like, to obtain obstacle information such as a vehicle, a pedestrian, a sidewalk, a fence, a water safety barrier, and a road junction. Alternatively, information such as a location and a range of a traffic light or a road sign in the field of view image are recognized by using a "you only look once" (you only look once, YOLO) algorithm. Alternatively, a text on the road sign is further recognized by using an optical character recognition (optical character recognition, OCR) algorithm. An image recognition algorithm used by the field of view image element recognition module 702 is not limited in this embodiment.

The information inference module 703 is configured to further determine actual vehicle traveling information, actual road condition information, and the like based on the key information determined by the field of view image element recognition module 702. For example, whether an ego vehicle travels in a wrong way is inferred based on locations of vehicles on lanes at different moments. Alternatively, whether there is an obstacle in each lane is determined based on the field of view image, and when there is an obstacle in the first lane, whether the obstacle affects passing of the vehicle is determined. Alternatively, whether there is an intersection in a current field of view is inferred based on information such as a text on the road sign, a traffic light, a zebra crossing, and a traveling direction of a vehicle ahead. Alternatively, whether construction is performed ahead is inferred based on a text on the road sign.

The navigation module 704 is configured to provide navigation information of the vehicle. The navigation information includes but is not limited to a navigation point, an intersection node, an intersection type, and the like. The navigation point is a future traveling track planned by a navigation application for the ego vehicle with reference to location information and destination information of the ego vehicle. The intersection node is used to segment navigation points, indicate different intersections, and distinguish between different intersections. The intersection type includes but is not limited to a forward intersection, a left-turn intersection, a right-turn intersection, a U-turn intersection, a crossroad, and the like.

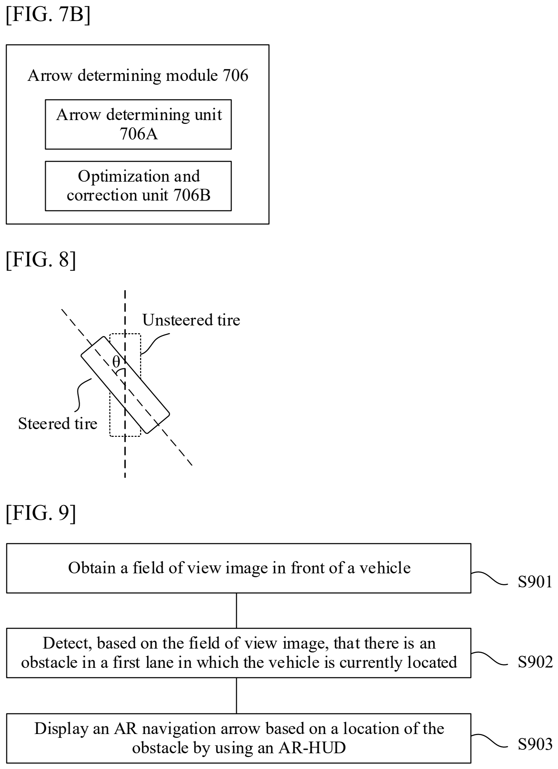

The vehicle-mounted monitoring module 705 is configured to: determine lane line information, and monitor pose information of the ego vehicle. In this embodiment, the lane line information includes an attribute of a lane line, three-dimensional coordinates of the lane line in the vehicle coordinate system, and the like. The attribute of the lane line may be a color, a line type, or the like. The pose information of the vehicle includes location information, a steering angle, and the like. The location information may be longitude and latitude information. The steering angle is an included angle formed between a direction of a tire of the vehicle when the tire rotates leftward or rightward and a direction of the tire when the tire does not deflect. For details, refer to FIG. 8.

The arrow determining module 706 is configured to determine a type and a location of an AR navigation arrow based on information output by the foregoing modules, so that the AR-HUD displays the AR navigation arrow of this type at the location.

A type of an arrow may be determined based on a type of an intersection, and different types of arrows have different indication functions. For example, a type of an arrow of a left-turn intersection is determined as a left-turn arrow, and the left-turn arrow indicates the vehicle to turn left at a front intersection. Alternatively, a type of an arrow of a right-turn intersection is determined as a right-turn arrow, and the right-turn arrow indicates the vehicle to turn right at a front intersection. Alternatively, a type of an arrow of a U-turn intersection is determined as a U-turn arrow, and the U-turn arrow indicates the vehicle to make a U-turn at a front intersection. Alternatively, a type of an arrow of a crossroad is determined as a branch road traveling arrow, and the crossroad traveling arrow indicates the vehicle to travel toward a branch road. In addition, the arrow determining module 706 may further determine, based on an actual road condition, a lane change arrow that indicates the vehicle to change a lane for traveling. A type of the arrow is not specifically limited in this embodiment.

In addition, a location of the arrow may be determined based on a location of the vehicle, a location of the first lane in which the vehicle is currently located, and a location of an obstacle such as a water safety barrier, a fence, or a junction of a crossroad in the first lane.

In some implementations, the arrow determining module 706 comprehensively analyzes information output by modules such as the field of view image element recognition module 702, the information inference module 703, the navigation module 704, and the vehicle-mounted monitoring module 705, to determine a type and a location of an AR navigation arrow, so that the AR-HUD displays the AR navigation arrow of this type at the location.

In some other implementations, refer to FIG. 7B. The arrow determining module 706 includes an arrow determining unit 706A and an optimization and correction unit 706B. The arrow determining unit 706A determines a type and an initial display location of an AR navigation arrow based on information output by the navigation module 704 and the vehicle-mounted monitoring module 705. The optimization and correction unit 706B is configured to: first correct the initial display location of the navigation arrow based on information output by the field of view image element recognition module 702 and the information inference module 703, and determine a corrected display location of the arrow, so that the AR-HUD displays the AR navigation arrow of this type at the corrected display location.

The alarm prompt module 707 is configured to perform, based on information output by the field of view image element recognition module 702 or the information inference module 703, alarm prompt on a risky scenario, a suspected error scenario, or the like. For example, the risky scenario includes road construction ahead, an obstacle on a road ahead, wrong-way traveling of the ego vehicle, and the like. The suspected error scenario includes that a detected road does not match a road prompted by the navigation, for example, a crossroad prompted by the navigation is not detected.

The AR-HUD 708 is configured to present, in a field of view in front of the vehicle, meter information of the vehicle, driving reminder information, navigation information, and an AR picture integrated with actual road condition information, for example, an AR navigation arrow, so that a driver can conveniently obtain information. For details, refer to the foregoing description.

It should be noted that the structure shown in this embodiment of this application does not constitute a specific limitation on the vehicle. In some other embodiments, the vehicle may further include more components than those shown in the figure, or some components may be combined, or some components may be split, or different component arrangements may be used. The components shown in the figure may be implemented by hardware, software, or a combination of software and hardware.

In some embodiments, the vehicle may further include a radar, for example, a lidar or a millimeter-wave radar. For example, the radar may co-work with the field of view image obtaining module 701 and the field of view image element recognition module 702. For example, the radar may first detect whether there is an obstacle near the vehicle, and when there is an obstacle near the vehicle, the field of view image obtaining module 701 collects a field of view image, and the field of view image element recognition module 702 recognizes the field of view image, to reduce power consumption in an image collection and recognition process.

The following specifically describes the vehicle navigation arrow display method provided in this embodiment.

FIG. 9 is a schematic flowchart of a navigation arrow display method according to an embodiment of this application. Refer to FIG. 9. The method is performed by a corresponding module in a vehicle, and specifically includes the following steps S901 to S903.

S901: Obtain a field of view image in front of the vehicle.

In this embodiment, the vehicle obtains the field of view image in front of the vehicle through the field of view image obtaining module 701. The field of view image includes a field of view image in front of a windshield of a driver, and may further include field of view images outside left and right windows of the vehicle. This is not limited in this embodiment.

S902: Detect, based on the field of view image, that there is an obstacle in a first lane in which the vehicle is currently located.

In this embodiment, the vehicle detects, by using the field of view image element recognition module 702 and an image recognition algorithm, whether there is an obstacle in the first lane in which the vehicle is currently located. The obstacle includes a series of static objects that hinder traffic such as a fence, a water safety barrier, a junction of a crossroad, a construction fence, a sand heap, a soil heap, a stone, goods scattered by other vehicles, and parked vehicles (such as a bicycle, a motorcycle, and an electric vehicle). Alternatively, the obstacle may be a dynamic object such as a vehicle traveling outside the vehicle, a walking pedestrian, or a running animal. A specific type of the obstacle is not limited in this embodiment.

S903: Display an AR navigation arrow by using an AR-HUD based on a location of the obstacle.

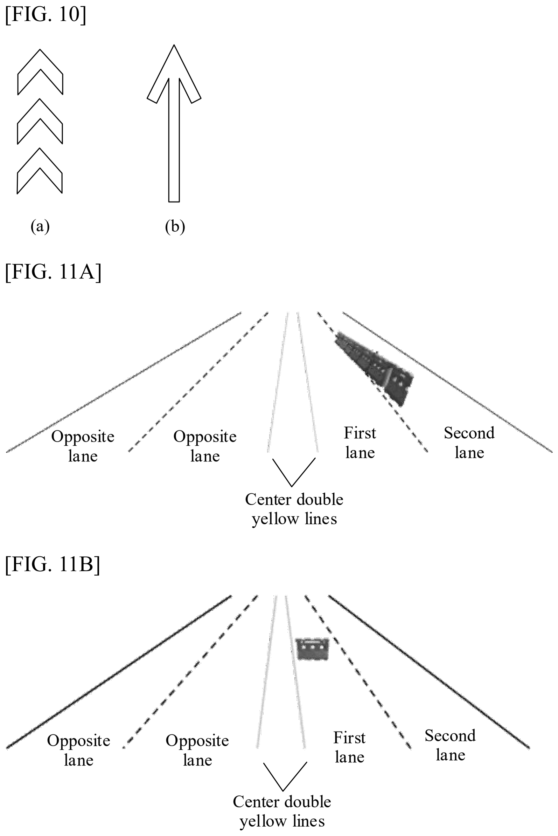

A display style of the AR navigation arrow is not limited in this embodiment. The AR navigation arrow may be, for example, a solid-line-style arrow shown in FIG. 10 (a), or may be, for example, a fishbone-style arrow shown in FIG. 10 (b). Certainly, the AR navigation arrow may be in another style.

In S903, different sizes, shapes, and locations of obstacles in the first lane have different impact on a passing condition of each lane. For example, when the obstacle is located in the middle of the first lane and has a large size, the obstacle usually affects passing of the vehicle in the first lane. When the obstacle is located at the edge of the first lane and occupies a small area of the first lane, the obstacle usually does not affect passing of the vehicle in the first lane. It may be understood that, when passing conditions of roads are different, display occasions and locations of AR navigation arrows are different.

Therefore, the vehicle may first perform image recognition on the field of view image to determine a passing condition of each lane, and then display the AR navigation arrow based on the passing condition of the lane. Details are described below.

Case 1: For example, as shown in FIG. 11A, there is an obstacle in the first lane in which the vehicle is currently located, but the first lane is passable. In this case, the vehicle displays, with reference to a location of the obstacle and a location of the first lane, an AR navigation arrow that indicates to pass the first lane.

Case 2: For example, as shown in FIG. 11B, there is an obstacle in the first lane in which the vehicle is currently located and the first lane is not passable, but a second lane in the same direction is passable. In this case, the vehicle displays, with reference to a location of the obstacle, a location of the first lane, and a location of the second lane, an AR navigation arrow that indicates the vehicle to travel from the first lane to the second lane. Alternatively, in this case, the vehicle displays prompt information, where the prompt information prompts: A current lane is not passable, and please travel to another lane.

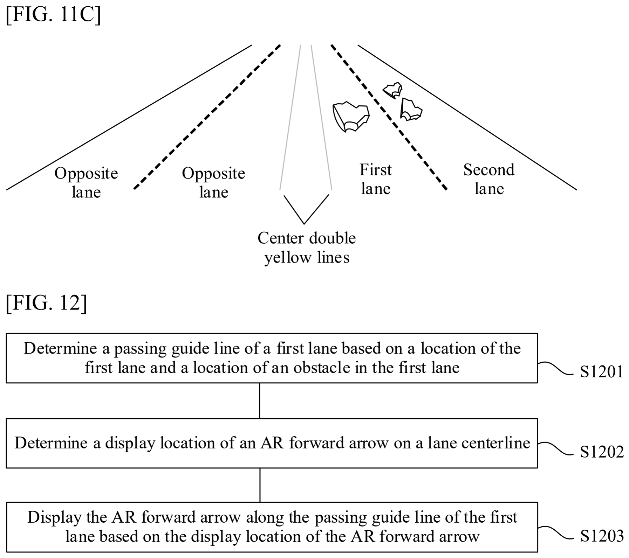

Case 3: For example, as shown in FIG. 11C, there is an obstacle in both the first lane in which the vehicle is currently located and another lane in a same direction as the first lane, and the first lane and the another lane are not passable. In this case, the vehicle does not display an AR navigation arrow, but displays prompt information by using the AR-HUD, where the prompt information prompts: A current road is not passable.

It can be learned that, in this embodiment, the AR navigation arrow can be intelligently displayed with reference to the location of the obstacle, so that display effect of the AR navigation arrow better fits an actual road condition, and viewing experience is better.

The following separately describes in detail a display status of the AR navigation arrow in the foregoing case 1 to case 3.

Case 1: There is an obstacle in the first lane, but the first lane is passable.

The vehicle may encounter various traveling scenarios during traveling, for example, traveling forward, turning left at an intersection, turning right at an intersection, turning around, and traveling toward a crossroad. In different traveling scenarios, the AR-HUD may display, with reference to an actual field of view image, an AR navigation arrow that matches an actual road condition in a driving scenario. The following separately describes the AR navigation arrow display method provided in this embodiment by using examples in which the vehicle travels forward, turns left at an intersection, and travels toward a crossroad.

(1) The vehicle travels forward in the first lane.

In this embodiment, the vehicle currently travels in the first lane, and the vehicle should continue to travel in the first lane based on navigation information. In this embodiment, that the vehicle travels forward in the first lane means that the vehicle continues to travel forward in a direction of the first lane. Because the first lane may be a straight line or a curve, an actual path on which the vehicle travels forward may be a straight line or a curve. In other words, traveling forward by the vehicle cannot be narrowly understood as traveling forward in a straight line.

In this scenario, if the vehicle detects that there is an obstacle that does not affect passing in the first lane, for example, a fence in FIG. 11A, the vehicle displays, in the first lane based on a location of the obstacle, an AR navigation arrow that indicates to travel forward, for example, an AR forward arrow.

FIG. 12 is a schematic flowchart of an AR navigation arrow display method in a forward scenario according to an embodiment of this application. The method is performed by a corresponding module in the vehicle, and specifically includes the following steps S1201 to S1203.

S1201: Determine a passing guide line of the first lane based on a location of the first lane and a location of the obstacle in the first lane.

In some embodiments, when the first lane is a straight line, the vehicle may determine a passable area of the first lane, and determine an area center line of the passable area as the passing guide line of the first lane. The passable area is a passable area that is in the first lane and that does not include an obstacle.

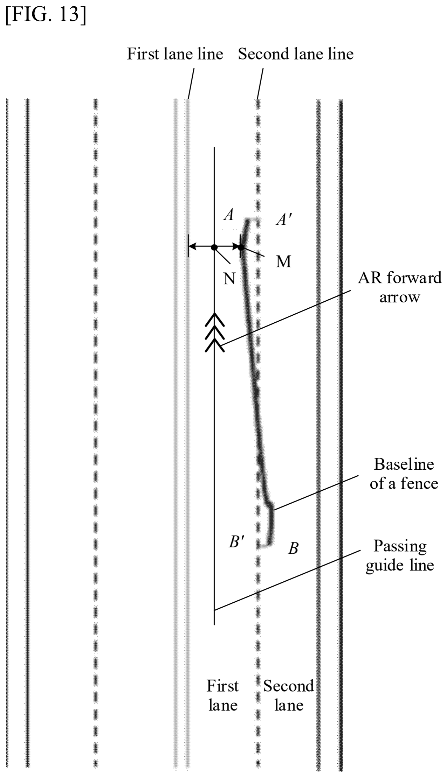

For example, as shown in FIG. 13, the first lane includes a first lane line and a second lane line, and an obstacle fence occupies the first lane and is located near the second lane line. In the figure, a curve AB is a baseline of the fence, A'B' is a projection line of the fence on the second lane line, and a point that is on the baseline AB of the fence and that is closest to the first lane line is a feature point M. The baseline of the obstacle is an intersection line between the obstacle and a road surface in the field of view image. It may be understood that an area on a left side of the feature point shown in the figure is the passable area of the first lane. The vehicle may determine a midpoint N of a perpendicular line between the feature point M and the first lane line. A straight line that passes through the midpoint N and that is parallel to the first lane is the area center line of the passable area. The vehicle may determine the area center line as the passing guide line.

In some other embodiments, when the first lane is a curve, the vehicle may determine a center line (namely, a boundary center line) of boundary lines on two sides of a passable area of the first lane, and determine the boundary center line as the passing guide line. Distances between points on the boundary center line and the boundary lines on the two sides are equal, and the boundary line includes a lane line and a baseline of the obstacle.

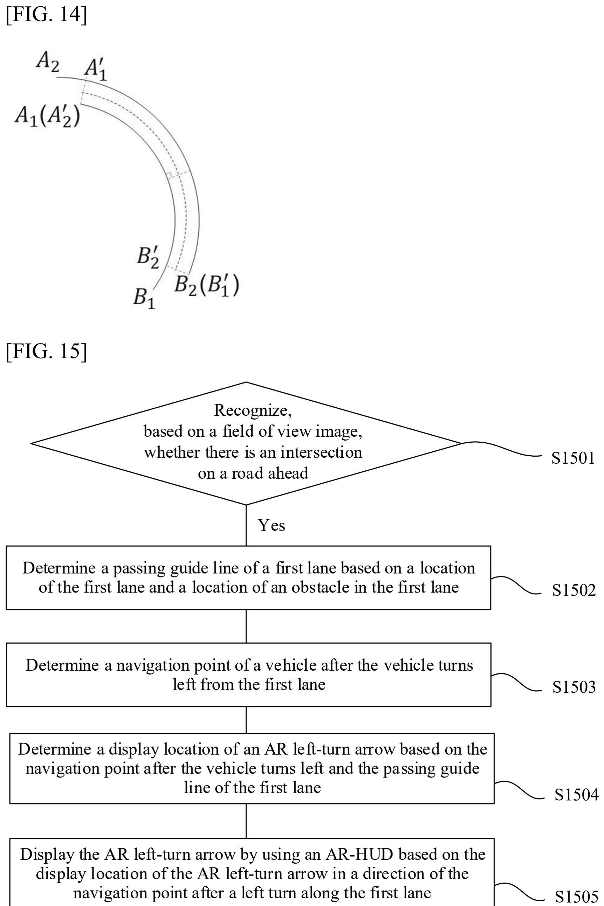

For example, as shown in FIG. 14, it is assumed that there is no obstacle in the first lane, and the boundary lines of the passable area of the first lane are lane lines on left and right sides. For example, a left lane line of the ego vehicle in the field of view image is a curve $A_1B_1$, and a right lane line of the ego vehicle is a curve $A_2B_2$. Points $A_1$ and $B_1$ are respectively projected onto the curve $A_2B_2$, and the projection points are respectively denoted as $A_1'$ and $B_1'$. Similarly, points $A_2$ and $B_2$ are respectively projected onto the curve $A_1B_1$, and the projection points are respectively denoted as $A_2'$ and $B_2'$. A segment $A_2'B_2'$ of the curve $A_1B_1$ and a segment $A_1'B_1'$ of the curve $A_2B_2$ are taken, points on one curve are traversed, and a perpendicular line of a tangent line of the curve is drawn and intersects with the other curve. Midpoints of perpendicular line segments are connected, to obtain the center line of the curve. A projection point of a point on the curve is a point that is on the curve and that is closest to the point.

It may be understood that, if there is an obstacle in the first lane, a boundary line on one side of the first lane or boundary lines on two sides of the first lane are replaced with a baseline of the obstacle on the side, and the passing guide line of the first lane may be determined by using the foregoing method. For example, if there is no obstacle on the left side of the first lane, but there is an obstacle on the right side of the first lane, the passing guide line of the first lane is determined based on the left lane line $A_1B_1$ of the first lane and a baseline $A_2B_2$ of the obstacle on the right side of the first lane. Alternatively, if there is an obstacle on the left side of the first lane, but there is no obstacle on the right side of the first lane, the passing guide line of the first lane is determined based on a baseline $A_1B_1$ of the obstacle on the left side of the first lane and the right lane line $A_2B_2$ of the first lane.

It should be noted that there is the obstacle in the first lane, and the obstacle causes the passable area of the vehicle in the first lane to become smaller. Therefore, there is a specific deviation between the passing guide line determined based on the passable area and a lane center line of the first lane. In addition, the passing guide line is more suitable for guiding the vehicle to safely pass through the obstacle.

S1202: Determine a display location of an AR forward arrow on the passing guide line.

For example, the arrow determining module 706 of the vehicle may determine a point that is at a preset distance from the vehicle and that is on the passing guide line as the display location of the AR forward arrow. The preset distance may be 20 meters, 30 meters, or the like. This is not limited in this embodiment.

S1203: Display the AR forward arrow along the passing guide line of the first lane based on the display location of the AR forward arrow.

For example, the AR-HUD of the vehicle displays an AR forward arrow shown in FIG. 13 at a location of 20 meters away from the vehicle along the passing guide line of the first lane. In addition, a display style of the AR forward arrow is not limited in this embodiment.

It should be noted that, in a conventional technology, impact of an obstacle in the first lane is usually not considered, and an AR navigation arrow is directly displayed at a central location of the first lane. The AR navigation arrow may cause the driver to travel in a direction of the arrow and encounter an obstacle, which poses a safety risk. However, in this embodiment, when the vehicle moves forward in the first lane, if there is an obstacle that does not affect passing in the first lane, the vehicle can display the AR forward arrow at a central location of an obstacle-free area in the first lane, to guide the vehicle to safely pass. In contrast, the AR navigation arrow displayed in this application not only is highly integrated with an actual road condition, but also helps the vehicle drive safely.

(2) The vehicle turns left at an intersection in the first lane.

In this embodiment, the vehicle currently travels in the first lane, and the vehicle should turn left at the intersection in the first lane based on navigation information. In this scenario, if the vehicle detects that there is an obstacle that does not affect passing in the first lane, for example, a fence in FIG. 11A, the vehicle displays, in the first lane based on a location of the obstacle, an AR navigation arrow that indicates to turn left.

FIG. 15 is a schematic flowchart of an AR navigation arrow display method in a left turning scenario according to an embodiment of this application. The method is performed by a corresponding module in the vehicle, and specifically includes the following steps S1501 to S1505.

S1501: Recognize, based on a field of view image, whether there is an intersection on a road ahead.

The navigation module 704 may have inaccurate road information. Therefore, if the navigation module 704 indicates that the vehicle is about to turn left at the intersection, the field of view image element recognition module 702 may first recognize whether there is an intersection on the road ahead, to avoid an AR navigation arrow display error. For example, the field of view image element recognition module 702 may recognize the field of view image by using an image recognition algorithm such as BiSeNet, YOLO, and OCR. If it is recognized, based on the field of view image, that there is a traffic light on the road ahead, and/or it is recognized that a road sign indicates that there is an intersection ahead, and/or it is recognized that there is a large quantity of vehicles traveling horizontally ahead, it is determined that there is an intersection ahead.

When there is an intersection on the road ahead, step S1502 is performed. Certainly, the vehicle may alternatively not perform S1501, consider correctness of the navigation information by default, and directly perform S1502. This is not limited in this embodiment.

S1502: Determine a passing guide line of the first lane based on a location of the first lane and a location of an obstacle in the first lane.

For a specific manner of determining the passing guide line of the first lane, refer to S1201. Details are not described herein again.

S1503: Determine a navigation point of the vehicle after the vehicle turns left from the first lane.

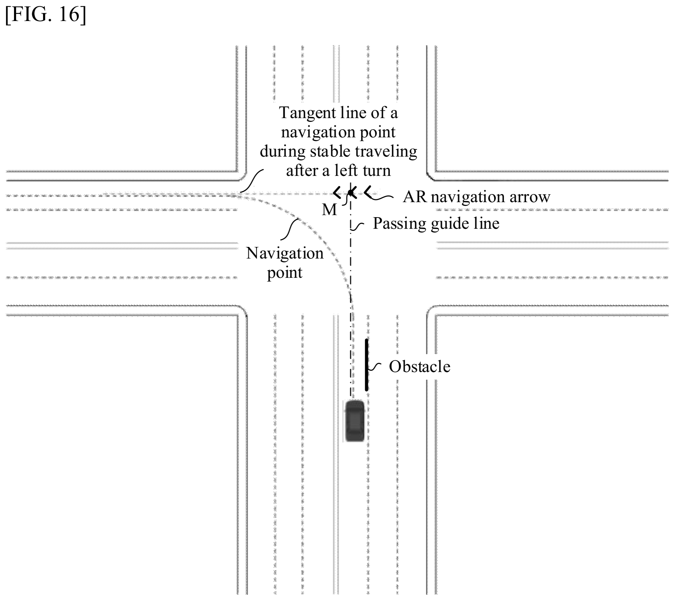

In this embodiment, the navigation point is a future traveling route planned by the navigation module 704 based on destination information and a location of the ego vehicle. For example, as shown in FIG. 16, a navigation point after the vehicle turns left is a future traveling route after the vehicle turns left. After turning left, the vehicle usually stably travels in a straight line in a lane. Therefore, the navigation point of the vehicle after a left turn is basically a straight line. Therefore, the vehicle may directly obtain, from the navigation module 704, a navigation point of the vehicle after the vehicle turns left from the first lane.

S1504: Determine a display location of an AR left-turn arrow based on the navigation point after the vehicle turns left and the passing guide line of the first lane.

In this embodiment, a display location of an AR navigation arrow in a turning scenario is an intersection point between a tangent line of a navigation point after turning and the passing guide line of the first lane. The turning scenario includes a left-turn scenario and a right-turn scenario. Refer to FIG. 16. Therefore, in the left-turn scenario, a display location of an AR left-turn arrow is an intersection point between a tangent line of a navigation point after a left turn and the passing guide line of the first lane, that is, a point M in FIG. 16.

S1505: Display the AR left-turn arrow by using the AR-HUD based on the display location of the AR left-turn arrow in a direction of the navigation point after a left turn along the first lane.

For example, as shown in FIG. 16, the AR-HUD of the vehicle displays the AR left-turn arrow by using the point M as a center in the direction of the navigation point after a left turn in the first lane. Certainly, the AR-HUD module may alternatively use the point M as a start point of the AR left-turn arrow. A location of the point M on the arrow is not limited in this embodiment.

(3) The vehicle travels in the first lane toward a crossroad.

In this embodiment, the vehicle currently travels in the first lane, and the vehicle should travel toward a crossroad on a right side of the first lane based on the navigation information. In this scenario, an AR navigation arrow display method is as follows:

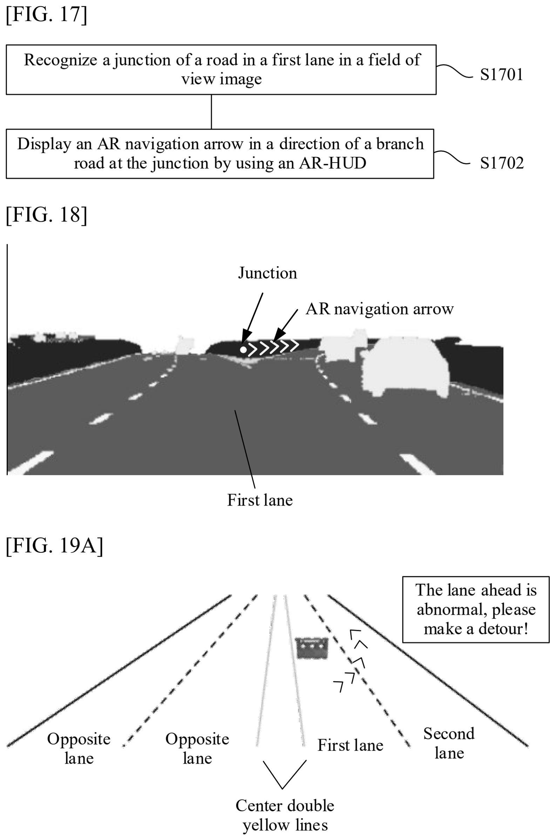

FIG. 17 is a schematic flowchart of an AR navigation arrow display method in a branch road traveling scenario according to an embodiment of this application. As shown in FIG. 17, the method includes S1701 and S1702.

S1701: Recognize a junction of a road in a first lane in a field of view image.

In this embodiment, the field of view image element recognition module 702 may recognize the junction of the crossroad by using a BiSeNet algorithm, to obtain pixel coordinates of the junction.

S1702: Display an AR navigation arrow in a direction of a branch road at the junction by using the AR-HUD.

For example, as shown in FIG. 18, the AR-HUD of the vehicle uses the junction as a start point, and displays the AR navigation arrow to a driver on a road wall on a left side of the vehicle in a direction of the road wall of the branch road. It should be noted that, compared with displaying the AR navigation arrow in the middle of the branch road, displaying the AR navigation arrow to the user in the direction of the road wall of the branch road is more convenient for the driver to watch, and can play a better guiding role.

Case 2: There is an obstacle in the first lane and the first lane is not passable, and a second lane is passable.

In some embodiments, as shown in FIG. 19A, when there is an obstacle in the first lane and the first lane is not passable, but the second lane is passable, the vehicle displays, by using the AR-HUD, an AR navigation arrow used to prompt the vehicle to travel from the first lane to the second lane.

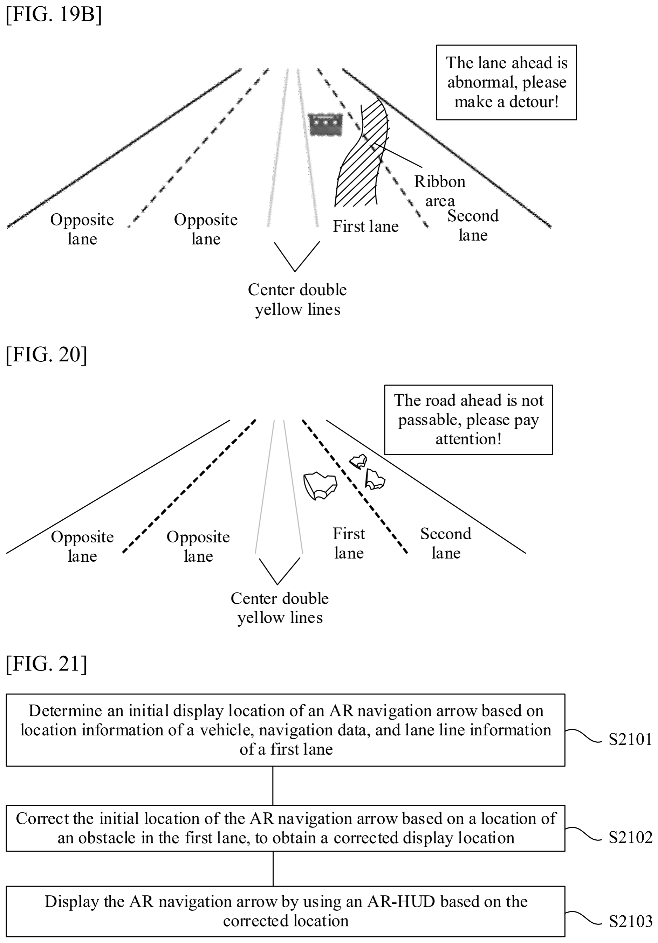

In some other embodiments, as shown in FIG. 19B, when there is an obstacle in the first lane and the first lane is not passable, but the second lane is passable, the vehicle may further display and project a ribbon area on the ground by using the AR-HUD or a vehicle headlight (namely, a headlight of the vehicle). The ribbon area extends from the first lane to the second lane, and a preset distance (for example, 1 meter) is kept between the ribbon area and the obstacle, to guide the vehicle to pass through the area and avoid the obstacle.

Optionally, refer to FIG. 19A and FIG. 19B. The vehicle may further display, by using the AR-HUD, prompt information indicating that the first lane is not passable. For example, the prompt information is: A lane ahead is abnormal. Please make a detour!

Case 3: There is an obstacle in both the first lane and another lane, and the first lane and the another lane are not passable.

In this embodiment, refer to FIG. 20. When there is an obstacle in both the first lane and a second vehicle, and the first lane and the second vehicle are not passable, the vehicle does not display an AR navigation arrow, and displays, by using the AR-HUD, prompt information prompting that a road ahead is not passable. For example, the prompt information may be: A road ahead is not passable. Please pay attention! Alternatively, the prompt information is: There is an obstacle on a road ahead, and the road is not passable!

It should be noted that, in some embodiments, when a plurality of lanes in a same direction, for example, the first lane and the second lane shown in FIG. 20, are not passable, even if an opposite lane is passable, the vehicle also does not use the AR-HUD to display information indicating to travel in a wrong way to bypass an obstacle, to ensure driving safety.

In the foregoing process of displaying the AR navigation arrow, the vehicle directly determines the AR navigation arrow based on information output by each module, and displays the AR navigation arrow. In some other embodiments, the vehicle may first determine an initial display location of an AR navigation arrow by using a conventional method, correct the initial display location of the AR navigation arrow when there is an obstacle in the first lane, and display the AR navigation arrow based on the corrected location. Details are described below.

FIG. 21 is a flowchart of an AR navigation arrow display method according to another embodiment of this application. Refer to FIG. 21. The method specifically includes the following steps S2101 to S2103.

S2101: Determine an initial display location of an AR navigation arrow based on location information of a vehicle, navigation data, and lane line information of a first lane.

In this embodiment, this step is specifically performed by the arrow determining unit 706A in the arrow determining module 706. For a specific process of determining the initial display location, refer to a related technology. Details are not described in this embodiment of this application.

S2102: Correct the initial location of the AR navigation arrow based on a location of an obstacle in the first lane, to obtain a corrected display location.

In this embodiment, this step is specifically performed by the optimization and correction unit 706B in the arrow determining module 706. For example, the optimization and correction unit 706B may first determine a target display location of the AR navigation arrow based on information output by other modules, and replace the initial display location with the target display location. The target display location is the corrected display location.

For a specific process of determining the target display location, refer to the foregoing description. Details are not described herein again.

S2103: Display the AR navigation arrow by using an AR-HUD based on the corrected location.

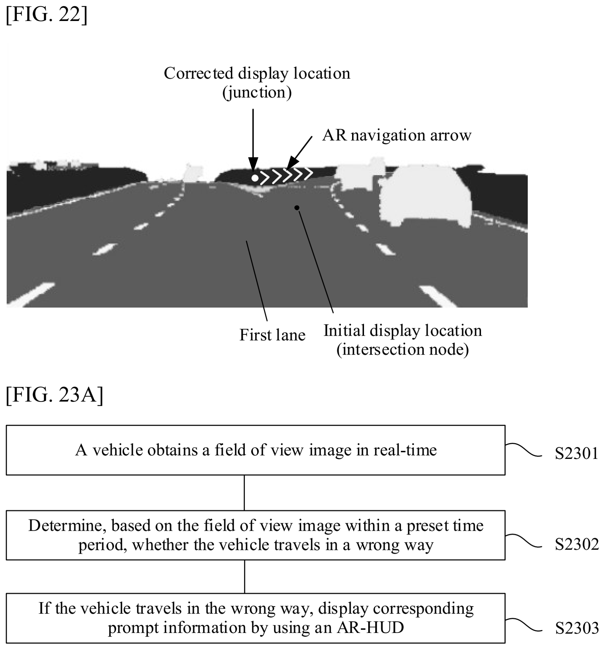

For S2101 to S2103, refer to FIG. 22. A scenario in which the vehicle travels in the first lane toward a right crossroad is used as an example. The vehicle may first determine, by using a conventional technology and based on the location information of the vehicle, the navigation data, the lane line information of the first lane, and the like, that the initial display location of the AR navigation arrow is an intersection node of the crossroad. Then, the vehicle recognizes the intersection node of the crossroad by using an image recognition algorithm, and correct a display location of the AR navigation arrow from the intersection node to a junction. Finally, the vehicle displays, by using the AR-HUD, the AR navigation arrow in a direction of a branch road in the first lane at the junction.

It should be noted that, in the foregoing process of correcting the AR navigation arrow, S2101 and S2102 are algorithms executed inside the vehicle, and a user is unaware of the algorithms. In other words, in a scenario in which there is an obstacle in the first lane, the vehicle does not first display the AR navigation arrow at the initial display location, and then moves the AR navigation arrow to the corrected display location, but directly corrects the display location internally, and then directly displays the AR navigation arrow at the corrected location.

In conclusion, according to the method provided in this embodiment of this application, the electronic device may intelligently recognize an obstacle in a lane in which the vehicle is currently located, and intelligently display passing prompt information based on the obstacle, for example, display an AR navigation arrow based on a location of the obstacle, or display the passing prompt information based on a passing condition of the current lane and a passing condition of another lane, so that display effect of the AR navigation arrow is highly integrated with an actual road condition, and user experience is good.

During traveling, the vehicle may encounter some unreliable scenarios, for example, road construction ahead, inconsistency between navigation information and an actual road condition, or wrong-way traveling of a vehicle. Based on this, the vehicle may recognize a collected field of view image, and give an alarm prompt for these unreliable scenarios. The following separately provides specific descriptions.

(1) Road construction ahead

The vehicle may recognize, by using the field of view image element recognition module 702 and an image recognition algorithm, the field of view image collected by the vehicle, to determine whether the road ahead is under construction. If detecting that the road ahead is under construction, the vehicle displays corresponding prompt information by using the AR-HUD. For example, the prompt information may be: A road ahead is under construction. Please travel with caution.

(2) The navigation information is inconsistent with the actual road condition.

Due to reasons such as incomplete navigation information or untimely update, the navigation information may be inconsistent with the actual road condition in a traveling process of the vehicle. For example, a navigation application indicates the vehicle to turn right, but there is no intersection on the right side. Alternatively, the navigation application indicates the vehicle to move forward, but there is no road in a forward direction.

In this case, the vehicle may recognize information such as a traffic light, a road sign, a lane line, and an actual road image in a field of view image by using the field of view image element recognition module 702, to determine an actual road condition ahead. When the navigation information is inconsistent with the actual road condition, the vehicle displays corresponding alarm prompt information by using the AR-HUD. For example, the alarm prompt information may be: A road ahead is abnormal. Please travel with caution.

(3) Wrong-way traveling of the vehicle

In a passing process, the vehicle may travel to an opposite lane due to reasons such as a non-passable road ahead of the vehicle, or a violation operation performed by a driver. This poses a safety risk to some extent. To ensure traveling safety of the vehicle, the vehicle may recognize a traveling location of the vehicle based on the collected field of view image. If detecting that the vehicle travels in the opposite lane, the vehicle displays corresponding prompt information. Details are described below.

FIG. 23A is a schematic flowchart of a lane recognition method according to an embodiment of this application. Refer to FIG. 23A. The method specifically includes the following steps S2301 to S2303.

S2301: The vehicle obtains a field of view image in real time.

Generally, the vehicle captures the field of view image at a preset frequency during traveling. For example, the frequency may be 30 Hz, 60 Hz, or the like. This is not limited in this embodiment.

S2302: Determine, based on the field of view image within a preset time period, whether the vehicle travels in a wrong way.

In this embodiment, relative traveling directions between two vehicles include traveling in a same direction and traveling in opposite directions. Traveling in a same direction means that the two vehicles travel in a same direction, and traveling in opposite directions means that the two vehicles travel in opposite directions.

The vehicle may determine a relative traveling direction between the ego vehicle and another vehicle in a co-directional lane based on the field of view image within the preset time period by using an image recognition algorithm. A method for determining whether the vehicle travels in the wrong way is not limited in this embodiment.

In some embodiments, the vehicle recognizes the field of view image within the preset time period by using the image recognition algorithm, and determines, in a co-directional lane, a proportion of other vehicles whose heads face the ego vehicle to all vehicles. When the proportion is greater than a threshold, the vehicle determines that the vehicle may travel in the wrong way. For example, the first threshold may be 80%, 90%, or the like. In addition, the preset time period may be 5s, 10s, or the like. This is not limited in this embodiment.

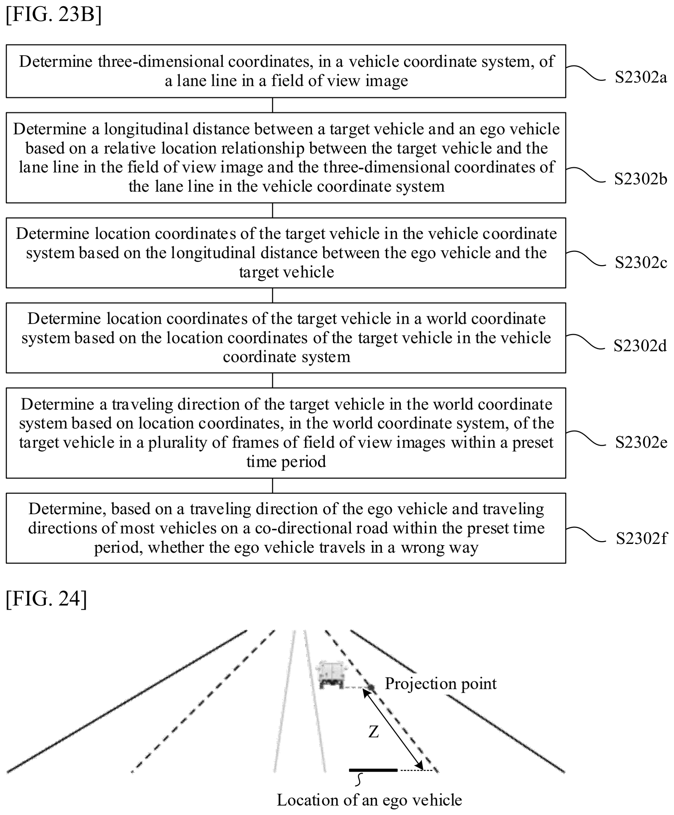

In some other embodiments, as shown in FIG. 23B, the vehicle may determine, based on location information of the ego vehicle in a world coordinate system and with reference to an image recognition algorithm, a traveling direction of each vehicle in a co-directional lane in the world coordinate system, to determine whether the ego vehicle travels in the wrong way. The method specifically includes the following steps S2302a to S2302f.

S2302a: Determine three-dimensional coordinates, in a vehicle coordinate system, of a lane line in a field of view image.

It can be learned from the foregoing description that the vehicle-mounted monitoring module 705 can obtain three-dimensional coordinates of an actual lane line in a vehicle coordinate system. It may be understood that after projecting the three-dimensional coordinates into the field of view image, the vehicle may determine each pixel of the lane line in the field of view image.

S2302b: Determine a longitudinal distance between a target vehicle and the ego vehicle based on a relative location relationship between the target vehicle and the lane line in the field of view image and the three-dimensional coordinates of the lane line in the vehicle coordinate system.

A $k^{th}$ frame of field of view image is used as an example. The vehicle may first perform image segmentation on the field of view image, to find a sub-area occupied by each target vehicle on each lane. Then, as shown in FIG. 24, the vehicle determines a projection point of a wheel of each target vehicle on the lane line. Finally, the vehicle predicts a longitudinal distance Z between the target vehicle and the ego vehicle based on three-dimensional coordinates of a corresponding point on the lane line relative to the ego vehicle. In this embodiment, a longitudinal distance between two vehicles is a distance between the other vehicle ahead of the ego vehicle and the ego vehicle in a traveling direction of the ego vehicle.

S2302c: Determine location coordinates of the target vehicle in the vehicle coordinate system based on the longitudinal distance between the ego vehicle and the target vehicle.

In some embodiments, the vehicle may determine the location coordinates of the target vehicle in the vehicle coordinate system based on the longitudinal distance between the ego vehicle and the target vehicle in a reverse projection transformation manner. Details are described below.

The vehicle coordinate system shown in FIG. 5 is used as an example. It is assumed that the location coordinates of the target vehicle in the vehicle coordinate system are P = (X, Y, Z), where Z is the longitudinal distance Z between the target vehicle and the ego vehicle, and Z has been determined in step S2303b. It is assumed that a pixel of a center of the vehicle in the field of view image is p = (u, v), and an intrinsic parameter matrix of a camera is known and is K. In this case, parameters satisfy:

$$Z\begin{bmatrix}u\\v\\1\end{bmatrix}=K\begin{bmatrix}X\\Y\\Z\end{bmatrix} \cdot \begin{bmatrix}X\\Y\\Z\end{bmatrix}=K^{-1}\left(Z\begin{bmatrix}u\\v\\1\end{bmatrix}\right)$$ may be obtained by transforming the formula, so that the location coordinates P = (X, Y, Z) of the target vehicle in the vehicle coordinate system are determined.

S2302d: Determine location coordinates of the target vehicle in a world coordinate system based on the location coordinates of the target vehicle in the vehicle coordinate system.

It may be understood that, because a location of the ego vehicle in the world coordinate system and heading information of the ego vehicle can be detected, the location coordinates of the target vehicle in the vehicle coordinate system may be converted into the location coordinates in the world coordinate system based on the information.

S2302e: Determine a traveling direction of the target vehicle in the world coordinate system based on location coordinates, in the world coordinate system, of the target vehicle in a plurality of frames of field of view images within the preset time period.

It may be understood that, for each frame of field of view image, the vehicle may not only track and recognize the target vehicle by using an image recognition algorithm (for example, an optical flow method), but also perform the method shown in S2302a to S2302d for each frame of video image, to determine location information of the target vehicle in each frame of field of view image in the world coordinate system. Therefore, the traveling direction of the target vehicle may be determined based on the location information of the same target vehicle in the world coordinate system in the plurality of frames of images within the preset time period (for example, within 5s).

S2302f: Determine, based on a traveling direction of the ego vehicle and traveling directions of most vehicles on a co-directional road within the preset time period, whether the ego vehicle travels in the wrong way.

For ease of description, in this embodiment, the traveling direction of the ego vehicle is referred to as a first direction, and a direction opposite to the first direction is referred to as a second direction. Based on this, in some embodiments, the vehicle may collect statistics on a proportion, in the co-directional lane, of vehicles traveling in the first direction to all vehicles. If the proportion is greater than a first threshold, for example, 80%, the vehicle determines that the vehicle does not travel in the wrong way. If the proportion is less than a second threshold (for example, 10%), the vehicle determines that the vehicle travels in the wrong way. A manner of determining whether the ego vehicle travels in the wrong way is not limited in this embodiment.

S2303: If the vehicle travels in the wrong way, display corresponding prompt information by using the AR-HUD.

In an example, the prompt information may be: Note that the vehicle may travel in a wrong way. Alternatively, the prompt information may be: The vehicle has entered an opposite lane. Specific content of the prompt information is not limited in this embodiment.

According to the foregoing steps S2301 to S2303, the vehicle may recognize a field of view image within a period of time, to determine whether the ego vehicle travels in the wrong way, and provide a corresponding prompt when the ego vehicle travels in the wrong way, to ensure driving safety.

In conclusion, in this embodiment, when the AR navigation arrow and the prompt information are displayed, key elements such as a vehicle, a fence, a water safety barrier, a traffic light, a road sign, and a crossroad in the field of view image are comprehensively used, so that a display occasion, a display location, and the like of the vehicle AR navigation arrow and the indication information better match an actual road condition, and are compatible with various complex intersection scenarios, thereby providing good user experience.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

An embodiment of this application further provides a vehicle-mounted device. The vehicle-mounted device is configured to perform the navigation arrow display method shown in the foregoing embodiments.

An embodiment of this application further provides a vehicle. The vehicle is provided with an AR-HUD, and the vehicle is configured to perform the navigation arrow display method shown in the foregoing embodiments.

It should be noted that the vehicle (including an ego vehicle and another surrounding vehicle) in this embodiment may be a vehicle with a driving function such as an internal combustion engine vehicle that uses an engine as a power source, a hybrid vehicle that uses an engine and an electric motor as a power source, or an electric vehicle that uses an electric motor as a power source. A type of the vehicle is not specifically limited in this embodiment.

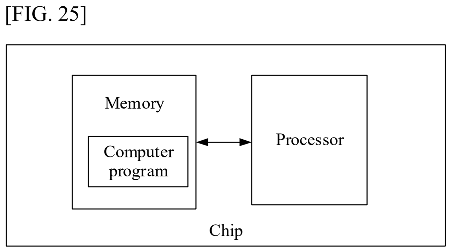

An embodiment of this application further provides a chip. As shown in FIG. 25, the chip includes a processor and a memory. The memory stores a computer program. When the computer program is executed by the processor, the navigation arrow display method in the foregoing embodiments is implemented.

An embodiment of this application further provides a computer-readable storage medium. The computer-readable storage medium stores a computer program. When the computer program is executed by a processor, the navigation arrow display method provided in the foregoing embodiments is implemented.

An embodiment of this application further provides a computer program product. The program product includes a computer program. When the computer program is run by an electronic device, the electronic device is enabled to implement the navigation arrow display method provided in the foregoing embodiments.

It should be understood that, the processor mentioned in this embodiment of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

In embodiments provided in this application, division into frameworks or modules is merely logical function division and may be other division during actual implementation. For example, a plurality of frameworks or modules may be combined or integrated into another system, or some features may be ignored or not performed.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

It should be noted that in this application, the word such as "example" or "for example" represents giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Reference to "one embodiment" or "some embodiments" described in the specification of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in embodiments of this application, and these modifications and replacements shall fall within the protection scope of this application.

**Claims**

1. A navigation arrow display method, applied to a vehicle-mounted device in a vehicle, wherein the vehicle is provided with a head up display HUD, and the method comprises:

   detecting that there is an obstacle in a first lane in which the vehicle is currently located;
   determining a location of the obstacle in a field of view image; and
   displaying a navigation arrow by using the HUD based on the location of the obstacle in the field of view image.

2. The method according to claim 1, wherein detecting that there is the obstacle in the first lane in which the vehicle is currently located comprises:

   obtaining the field of view image of the vehicle; and
   detecting, based on the field of view image, that there is the obstacle in the first lane in which the vehicle is currently located.

3. The method according to claim 1 or 2, wherein displaying the navigation arrow by using the HUD based on the location of the obstacle in the field of view image comprises:
   when the obstacle in the first lane does not affect passing, displaying, by using the HUD based on the location of the obstacle in the field of view image, the navigation arrow that indicates to pass the first lane.

4. The method according to any one of claims 1 to 3, wherein displaying the navigation arrow by using the HUD based on the location of the obstacle in the field of view image comprises:
   when the obstacle in the first lane affects passing, but a second lane in a same direction as the first lane is passable, displaying, by using the HUD based on the location of the obstacle in the field of view image, the navigation arrow that indicates to travel from the first lane to the second lane.

5. The method according to any one of claims 1 to 4, wherein displaying the navigation arrow by using the HUD based on the location of the obstacle in the field of view image comprises:

   determining a display location of the navigation arrow based on the location of the obstacle in the field of view image; and
   displaying the navigation arrow by using the HUD based on the display location of the navigation arrow.

6. The method according to claim 5, wherein when the navigation arrow is a forward arrow, determining the display location of the navigation arrow based on the location of the obstacle in the field of view image, and displaying the navigation arrow by using the HUD based on the display location of the navigation arrow comprise:

> determining a passing guide line of the navigation arrow based on the location of the obstacle in the field of view image;
> determining a location that is at a preset distance from the vehicle and that is on the passing guide line as the display location of the navigation arrow; and
> displaying, by using the HUD based on the display location of the navigation arrow, the navigation arrow along the passing guide line.

7. The method according to claim 6, wherein determining the passing guide line of the navigation arrow based on the location of the obstacle in the field of view image comprises:

> when the first lane in the field of view image is a straight lane, determining a passable area of the first lane based on the location of the obstacle, wherein the passable area does not comprise the obstacle; and
> determining an area center line of the passable area as the passing guide line of the first lane.

8. The method according to claim 6, wherein determining the passing guide line of the navigation arrow based on the location of the obstacle in the field of view image comprises:

> when the first lane in the field of view image is a curved lane, determining, based on the location of the obstacle in the field of view image, a center line of boundary lines on two sides of a passable area of the first lane, wherein distances between points on the center line and the boundary lines on the two sides of the passable area are equal; and
> determining the center line as the passing guide line of the navigation arrow.

9. The method according to claim 5, wherein when the navigation arrow is a left-turn arrow or a right-turn arrow, determining the display location of the navigation arrow based on the location of the obstacle in the field of view image, and displaying the navigation arrow by using the HUD based on the display location of the navigation arrow comprise:

> determining a passing guide line of the navigation arrow based on the location of the obstacle;
> determining, based on navigation information and traveling information of the vehicle, a track tangent line of the vehicle during stable traveling after the vehicle turns left or right;
determining an intersection point of the passing guide line and the track tangent line as the display location of the navigation arrow; and
displaying, by using the HUD based on the display location of the navigation arrow, the navigation arrow in a direction of the track tangent line after the vehicle turns left or right.

10. The method according to claim 5, wherein when the obstacle is a junction of a crossroad, determining the display location of the navigation arrow based on the location of the obstacle in the field of view image, and displaying the navigation arrow by using the HUD based on the display location of the navigation arrow comprise:

> determining a location of the junction as the display location of the navigation arrow; and
> displaying, by using the HUD, the navigation arrow along a branch road at the location of the junction.

11. The method according to claim 5, wherein determining the display location of the navigation arrow based on the location of the obstacle in the field of view image comprises:

> determining an initial display location of the navigation arrow based on navigation information and location information of the vehicle; and
> correcting the initial display location based on the location of the obstacle in the field of view image, to obtain a corrected display location, wherein the corrected display location is the display location of the navigation arrow.

12. The method according to any one of claims 1 to 11, wherein the obstacle comprises at least one of a fence, a water safety barrier, a road sign, a junction of a crossroad, a road construction fence, a pedestrian, and another vehicle.

13. The method according to any one of claims 1 to 12, wherein the method further comprises:

> recognizing, based on the field of view image within preset time, whether the vehicle is traveling in a wrong way; and
> if the vehicle is traveling in the wrong way, displaying prompt information prompting that the vehicle travels in the wrong way.

14. A vehicle-mounted device, wherein the vehicle-mounted device is configured to perform the method according to any one of claims 1 to 13.

15. A vehicle, wherein the vehicle comprises the vehicle-mounted device according to claim 14 and a head up display HUD.

16. A computer-readable storage medium, wherein the computer-readable storage medium stores a computer program, and when the computer program is executed by a processor, the method according to any one of claims 1 to 13 is implemented.

17. A chip, comprising a processor and a memory, wherein the memory stores a computer program, and when the computer program is executed by the processor, the method according to any one of claims 1 to 13 is implemented.

[FIG. 1]

Windshield

Light source

[FIG. 2]

AR navigation arrow

Center double yellow lines

[FIG. 3]

Danger prompt
information

Center double
yellow lines

[FIG. 4]

Opposite
lane

Opposite
lane

First lane

Second
lane

Center double
yellow lines

White dashed line

[FIG. 5]

Z

X

Y

[FIG. 6]

X

Y

•
(u, v)

[FIG. 7A]

| Field of view image obtaining module 701 |
| :---: |
| (configured to obtain a field of view image) |

| Field of view image element recognition module 702 |
| :---: |
| (configured to recognize a vehicle, a crossroad, a fence, a water safety barrier, a traffic light, a road sign, and the like) |

| Information inference module 703 |
| :---: |
| (configured to recognize a vehicle traveling direction, whether there is an intersection ahead, whether a vehicle travels in a wrong way, and the like) |

| Navigation module 704 |
| :---: |
| (configured to provide navigation data) |

| Vehicle-mounted monitoring module 705 |
| :---: |
| (configured to detect lane line information, a pose of an ego vehicle, and the like) |

| Arrow determining module 706 |
| :---: |

| Alarm prompt module 707 |
| :---: |

| AR-HUD 708 |
| :---: |

[FIG. 7B]

Arrow determining module 706

Arrow determining unit
706A

Optimization and
correction unit 706B

[FIG. 8]

Unsteered tire

θ

Steered tire

[FIG. 9]

Obtain a field of view image in front of a vehicle — S901

Detect, based on the field of view image, that there is an obstacle in a first lane in which the vehicle is currently located — S902

Display an AR navigation arrow based on a location of the obstacle by using an AR-HUD — S903

[FIG. 10]

(a)          (b)

[FIG. 11A]

Opposite      Opposite                First         Second
lane          lane                    lane          lane

Center double
yellow lines

[FIG. 11B]

Opposite      Opposite                First         Second
lane          lane                    lane          lane

Center double
yellow lines

[FIG. 11C]

Opposite lane    Opposite lane    First lane    Second lane

Center double
yellow lines

[FIG. 12]

| | |
|---|---|
| Determine a passing guide line of a first lane based on a location of the first lane and a location of an obstacle in the first lane | S1201 |
| Determine a display location of an AR forward arrow on a lane centerline | S1202 |
| Display the AR forward arrow along the passing guide line of the first lane based on the display location of the AR forward arrow | S1203 |

[FIG. 13]

First lane line    Second lane line

*A*    *A'*

M

N

AR forward
arrow

Baseline
of a fence

*B'*    *B*

Passing
guide line

First    Second
lane     lane

[FIG. 14]

[FIG. 15]

Recognize, based on a field of view image, whether there is an intersection on a road ahead — S1501

Yes

Determine a passing guide line of a first lane based on a location of the first lane and a location of an obstacle in the first lane — S1502

Determine a navigation point of a vehicle after the vehicle turns left from the first lane — S1503

Determine a display location of an AR left-turn arrow based on the navigation point after the vehicle turns left and the passing guide line of the first lane — S1504

Display the AR left-turn arrow by using an AR-HUD based on the display location of the AR left-turn arrow in a direction of the navigation point after a left turn along the first lane — S1505

[FIG. 16]

Tangent line of a navigation point during stable traveling after a left turn

AR navigation arrow

M

Passing guide line

Navigation point

Obstacle

[FIG. 17]

| Recognize a junction of a road in a first lane in a field of view image | S1701 |

| Display an AR navigation arrow in a direction of a branch road at the junction by using an AR-HUD | S1702 |

[FIG. 18]

Junction

AR navigation arrow

First lane

[FIG. 19A]

The lane ahead is abnormal, please make a detour!

Opposite lane

Opposite lane

First lane

Second lane

Center double yellow lines

[FIG. 19B]

The lane ahead is abnormal, please make a detour!

Opposite lane · Opposite lane · First lane · Ribbon area · Second lane · Center double yellow lines

[FIG. 20]

The road ahead is not passable, please pay attention!

Opposite lane · Opposite lane · First lane · Second lane · Center double yellow lines

[FIG. 21]

| | |
|---|---|
| Determine an initial display location of an AR navigation arrow based on location information of a vehicle, navigation data, and lane line information of a first lane | S2101 |
| Correct the initial location of the AR navigation arrow based on a location of an obstacle in the first lane, to obtain a corrected display location | S2102 |
| Display the AR navigation arrow by using an AR-HUD based on the corrected location | S2103 |

[FIG. 22]

Corrected display location (junction)

AR navigation arrow

First lane

Initial display location (intersection node)

[FIG. 23A]

| A vehicle obtains a field of view image in real-time | S2301 |
| Determine, based on the field of view image within a preset time period, whether the vehicle travels in a wrong way | S2302 |
| If the vehicle travels in the wrong way, display corresponding prompt information by using an AR-HUD | S2303 |

[FIG. 23B]

| Determine three-dimensional coordinates, in a vehicle coordinate system, of a lane line in a field of view image | S2302a |

| Determine a longitudinal distance between a target vehicle and an ego vehicle based on a relative location relationship between the target vehicle and the lane line in the field of view image and the three-dimensional coordinates of the lane line in the vehicle coordinate system | S2302b |

| Determine location coordinates of the target vehicle in the vehicle coordinate system based on the longitudinal distance between the ego vehicle and the target vehicle | S2302c |

| Determine location coordinates of the target vehicle in a world coordinate system based on the location coordinates of the target vehicle in the vehicle coordinate system | S2302d |

| Determine a traveling direction of the target vehicle in the world coordinate system based on location coordinates, in the world coordinate system, of the target vehicle in a plurality of frames of field of view images within a preset time period | S2302e |

| Determine, based on a traveling direction of the ego vehicle and traveling directions of most vehicles on a co-directional road within the preset time period, whether the ego vehicle travels in a wrong way | S2302f |

[FIG. 24]

Projection point

Z

Location of an ego vehicle

[FIG. 25]

## INTERNATIONAL SEARCH REPORT

| International application No. |
|---|
| **PCT/CN2024/132688** |

| A. | CLASSIFICATION OF SUBJECT MATTER |
|---|---|

G01C21/36(2006.01)i

According to International Patent Classification (IPC) or to both national classification and IPC

| B. | FIELDS SEARCHED |
|---|---|

Minimum documentation searched (classification system followed by classification symbols)

IPC: G01C21/-

Documentation searched other than minimum documentation to the extent that such documents are included in the fields searched

Electronic data base consulted during the international search (name of data base and, where practicable, search terms used)

CNTXT, CNABS, CNKI, WPABS, DWPI, ENTXT: 华为, 抬头显示, 平视显示, 实景, 增强现实, 导航, 箭头, 指示, 指引, 车道, 障碍, 行人, 车辆, 显示, 位置, 调整, 岔路口, 转弯, 拐弯, 曲线, HUAWEI, HUD, head up display, AR, augment reality, navigat+, arrow, display, position, location, obstacle, barrier, roadblock, adjust+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109919118 A (BAIDU ONLINE NETWORK TECHNOLOGY (BEIJING) CO., LTD.) 21 June 2019 (2019-06-21)<br>description, paragraphs 0025-0143, and figure 2 | 1-17 |
| A | CN 109624851 A (SHENZHEN HANGSHENG ELECTRONICS CO., LTD.) 16 April 2019 (2019-04-16)<br>entire document | 1-17 |
| A | CN 116972873 A (TENCENT TECHNOLOGY (SHENZHEN) CO., LTD.) 31 October 2023 (2023-10-31)<br>entire document | 1-17 |
| A | CN 114489332 A (BEIJING JINGWEI HIRAIN TECHNOLOGIES CO., LTD.) 13 May 2022 (2022-05-13)<br>entire document | 1-17 |
| A | CN 115683152 A (GREAT WALL MOTOR COMPANY LIMITED) 03 February 2023 (2023-02-03)<br>entire document | 1-17 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **02 January 2025** | **13 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/132688**

**C.    DOCUMENTS CONSIDERED TO BE RELEVANT**

| Category* | Citation of document, with indication, where appropriate, of the relevant passages | Relevant to claim No. |
|---|---|---|
| A | JP 2016102735 A (AISIN AW CO., LTD.) 02 June 2016 (2016-06-02)<br>entire document | 1-17 |

Form PCT/ISA/210 (second sheet) (July 2022)

**INTERNATIONAL SEARCH REPORT**
Information on patent family members

International application No.

**PCT/CN2024/132688**

| Patent document cited in search report | | | Publication date (day/month/year) | Patent family member(s) | | | Publication date (day/month/year) |
|---|---|---|---|---|---|---|---|
| CN | 109919118 | A | 21 June 2019 | None | | | |
| CN | 109624851 | A | 16 April 2019 | None | | | |
| CN | 116972873 | A | 31 October 2023 | None | | | |
| CN | 114489332 | A | 13 May 2022 | None | | | |
| CN | 115683152 | A | 03 February 2023 | None | | | |
| JP | 2016102735 | A | 02 June 2016 | JP | 6432312 | B2 | 05 December 2018 |

Form PCT/ISA/210 (patent family annex) (July 2022)

**EP 4 729 889 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311573540